(19)

Europäisches
Patentamt
European
Patent Office
Office européen
des brevets

(11) **EP 3 689 993 A1**

(12) **EUROPEAN PATENT APPLICATION**
published in accordance with Art. 153(4) EPC

(43) Date of publication:
**05.08.2020 Bulletin 2020/32**

(21) Application number: **18863312.7**

(22) Date of filing: **18.09.2018**

(51) Int Cl.:
*C09J 7/38* (2018.01)  *B32B 27/00* (2006.01)
*C09J 7/24* (2018.01)  *C09J 7/25* (2018.01)
*C09J 201/00* (2006.01)

(86) International application number:
**PCT/JP2018/034405**

(87) International publication number:
**WO 2019/065358 (04.04.2019 Gazette 2019/14)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **27.09.2017 JP 2017187004**

(71) Applicant: **Nitto Denko Corporation**
**Ibaraki-shi, Osaka 567-8680 (JP)**

(72) Inventors:
• **HORIGUCHI, Hakaru**
 **Ibaraki-shi**
 **Osaka 567-8680 (JP)**
• **YONEZAKI, Kosuke**
 **Ibaraki-shi**
 **Osaka 567-8680 (JP)**
• **KONDO, Hiroyuki**
 **Ibaraki-shi**
 **Osaka 567-8680 (JP)**

(74) Representative: **Grünecker Patent- und
Rechtsanwälte
PartG mbB
Leopoldstraße 4
80802 München (DE)**

(54) **ADHESIVE FILM**

(57)    Provided is a PSA film comprising a resin film as a substrate and a PSA layer provided at least on one face of the resin film. The PSAfilm includes a laser beam absorbent that comprises, as a constituent element, a metal having a specific heat of less than 900 J/kg ·K and a heat conductivity of less than 200 W/m ·K. The PSA film has a laser beam absorbance of 20 % or higher in the wavelength range between 900 nm and 1100 nm.

[Fig. 1]

FIG.1

**Description**

[Technical Field]

The present invention relates to a pressure-sensitive adhesive (PSA) film.
The present application claims priority based on Japanese Patent Application No. 2017-187004 filed on September 27, 2017; and the entire content thereof is incorporated herein by reference.

[Background Art]

Techniques involving laser beam machining have been widely used for cutting and hole-making, etc., of various materials. Carbon dioxide laser is a typical example of a laser used for such machining processes. For instance, in an embodiment of such laser machining, a PSA film as an auxiliary material is adhered to a surface of a workpiece and irradiated with a laser beam to laser-process the workpiece along with the PSAfilm. For example, Patent Document 1 discloses a technique to increase hole-making reliability or workability, etc., by pressure-bonding an auxiliary PSA sheet to a copper-clad board and projecting a carbon dioxide laser onto the auxiliary PSA sheet to make holes in the copper-clad board.
Recently, there is growing interest in machining techniques using a short-wavelength laser beam. For example, in place of a carbon dioxide laser (with a center wavelength of about 9.3 $\mu$m to 10.6 $\mu$m), there is a demand for laser machining using a short-wavelength laser having a center wavelength of about 0.9 $\mu$m to 1.1 $\mu$m. With the use of the short-wavelength laser beam, energy required for the process can be efficiently supplied to the workpiece. This can be advantageous in view of increasing the processing rate and of the ease of micro-processing.

[Citation List]

[Patent Literature]

[Patent Document 1] Japanese Patent Application Publication No. 2004-235194
[Patent Document 2] Japanese Patent Application Publication No. 2013-18963
[Patent Document 3] Japanese Patent Application Publication No. 2013-18964

[Summary of Invention]

[Technical Problem]

When a PSAfilm heretofore used for carbon dioxide laser machining of a workpiece is used as is for short-wavelength laser machining of a workpiece with the short-wavelength laser having a center wavelength of around 1/10 of that of a carbon dioxide laser, the machining process may be deprived of efficiency and precision.
Patent Documents 2 and 3 disclose PSA films suited for short-wavelength laser cutting, the laser having a center wavelength between about 1000 nm and 1100 nm. However, with respect to these PSA films, there is some room left for improvement for use in an embodiment where the PSA film applied on a workpiece is irradiated with the short-wavelength laser to process the workpiece along with the PSAfilm. For instance, the PSAfilm in Patent Document 2 can be cut well with a short-wavelength laser, but it has been difficult to increase the rate of processing workpieces with the PSAfilm applied thereon. As for the PSA film in Patent Document 3, it leaves black residues derived from the PSAfilm on the processed workpieces, may degrading the appearance.
In view of such circumstances, an objective of this invention is to provide a PSA film that enables efficient laser machining of a workpiece when applied the film on, using a short-wavelength laser having a center wavelength of 900 nm to 1100 nm; and is less likely to cause deterioration of the visual quality (appearance) of the processed workpiece.

[Solution to Problem]

The present description provides a PSA film comprising a resin film as a substrate and a PSAlayer provided at least on one face of the substrate. The PSAfilm includes a laser beam absorbent that comprises, as a constituent element, a metal having a specific heat of less than 900 J/kg ·K and a heat conductivity of less than 200 W/m ·K. The PSAfilm has a laser beam absorbance of 20 % or higher in the wavelength range between 900 nm and 1100 nm. It is noted that aluminum (Al) has a specific heat of 917 J/kg ·K and a heat conductivity of 238 W/m ·K.

Having at least 20 % laser beam absorbance in the wavelength range between 900 nm and 1100 nm, the PSA film in such an embodiment can efficiently absorb a laser beam having a center wavelength in the range between 900 nm and 1100 nm (or a "prescribed laser beam" hereinafter) and can be suitably cut, using the energy of the prescribed laser beam absorbed. This cutting may indicate cutting the PSA film by causing a local part of the PSA film to decompose and disappear or to melt down by projecting the prescribed laser beam thereto. The PSA film includes the laser beam absorbent (or the prescribed absorbent, hereinafter) comprising, as a constituent element, a metal having a specific heat of less than 900 J/kg ·K and a heat conductivity of less than 200 W/m ·K; and therefore, for instance, as compared to an embodiment using Al powder in place of the prescribed absorbent, the energy of the prescribed laser beam absorbed is allowed to more effectively act on the workpiece (an object being processed). Because the PSA film includes the prescribed absorbent, the workpiece can be effectively processed, even with no use of a laser beam absorbent that is likely to leave black residues on the processed workpiece or with its reduced usage. Hereinafter, the occurrence of black residues left on the processed workpiece may be referred to as "blackening" (or "contamination") and causing little to no blackening may be referred to as "(having) anti-blackening properties" (or "(having) non-contaminating properties"). The PSA film disclosed herein enables efficient processing of a workpiece with the prescribed laser beam while preventing or reducing blackening of the workpiece.

As the prescribed absorbent, a black metal compound can be preferably used. The black metal compound in the PSA film can effectively increase the prescribed laser beam absorbance. Thus, workpieces can be efficiently processed even when a potential blackening laser beam absorbent is not used or used in a reduced amount; and it is possible to improve the speed of processing with the prescribed laser beam while preventing the workpieces from blackening. While no particular limitations are imposed, the black metal compound can be used in an amount equivalent to, for instance, about 0.05 % or greater and 10 % or less by weight in the PSA film.

The PSA film according to some preferable embodiments includes less than 0.05 % carbon black (CB) by weight. Here, the CB content less than 0.05 % by weight encompasses a CB-free case, that is, a case where the CB content is 0 % by weight. According to the art disclosed herein, even when the CB content is limited as above, processing speed can be assured with the prescribed laser beam. Thus, higher process efficiency can be obtained while preventing blackening.

As the prescribed absorbent, for instance, at least one species can be selected from the group consisting of, for instance, iron-based oxides, titanium black and manganese-based oxides. From the standpoint of the material availability, iron-based oxides exemplify preferable prescribed absorbents.

In the PSA film according to some preferable embodiments, the substrate forming the PSA film comprises the prescribed absorbent. The substrate preferably has a prescribed laser beam absorbance of 20 % or higher. The PSA film disclosed herein can be favorably practiced in an embodiment having such a substrate.

In some embodiments, the substrate is a polyolefin resin film or a polyester resin film. A resin film having such a substrate is preferable because, when cut with the prescribed laser beam, the cut width can be easily controlled and the resulting cut edge surface is likely to have a precise shape. It is also preferable to be able to cut the PSA film with high precision from the standpoint of improving the appearance of the processed workpiece.

In some embodiments, the substrate may have a monolayer structure. A substrate having a monolayer structure can be advantageous in terms of manufacturing efficiency and quality consistency of the substrate.

The PSA film disclosed herein can be constituted to absorb the prescribed laser beam well while being less likely to cause black residues, that is, having excellent anti-blackening properties. Thus, the present description provides a PSA film for laser cutting that is formed of a PSA film disclosed herein used in an application involving cutting with the prescribed laser beam.

[Brief Description of Drawings]

Fig. 1 shows a cross-sectional diagram schematically illustrating the PSA film according to an embodiment.
Fig. 2 shows a cross-sectional diagram schematically illustrating the PSA film according to another embodiment.
Fig. 3 shows a cross-sectional diagram schematically illustrating the PSA film according to yet another embodiment.

[Embodiments of Description]

Preferred embodiments of the present invention are described below. Matters necessary to practice this invention other than those specifically referred to in this description may be understood to a person of ordinary skills in the art based on the disclosure of embodiments of the invention in this description and the common technical knowledge at the time of filing. The present invention can be practiced based on the contents disclosed in this description and common technical knowledge in the subject field. In the description below, members and sites providing the same effect may be indicated by a common reference numeral, and redundant descriptions may be omitted or simplified. The embodiments are schematically illustrated in the drawings for clear illustration of the present invention and the drawings do not accurately represent the sizes or scales of products actually provided.

In the present description, the term "laser beam absorbance" refers to a value determined by substituting transmittance T (%) and reflectance R (%) values measured with a spectrophotometer (e.g., spectrophotometer under model number "U-4100" available from Hitachi High-Technologies Corporation or a similar system, or equivalent) into the following equation (I):

$$\text{Absorbance A (\%)} = 100\,(\%) - T\,(\%) - R\,(\%) \qquad \text{(I)}$$

In the present description, the "laser beam absorbance in the wavelength range between 900 nm and 1100 nm" refers to the minimum laser beam absorbance in the said wavelength range. In the following description, the term "laser beam absorbance" refers to the minimum laser beam absorbance in the wavelength range between 900 nm and 1100 nm unless otherwise specified. As used herein, unless otherwise specified, the laser beam absorbance refers to the laser beam absorbance of the backside (the surface to be irradiated with the prescribed laser beam, i.e. the face on the reverse side of the face applied to a workpiece) of the PSA film or the substrate.

In this description, the "laser beam absorbent" refers to a material capable of increasing the laser beam absorbance in comparison to a case not using the laser beam absorbent. As used herein, the "prescribed absorbent" refers to a species among the aforementioned species of laser beam absorbent that comprises a metal having a heat capacity of lower than 900 J/kg ·K and a heat conductivity of lower than 200 W/m ·K. Here, a layer comprising a laser beam absorbent (possibly a prescribed absorbent) may be referred to as a "laser beam-absorbing layer."

The PSA film disclosed herein has a PSA layer on at least one face of the resin film as the substrate. It may be a single-faced PSAfilm (an adhesively single-faced PSA film) having a PSA layer only on one face (first face) of the substrate, or it may be a double-faced PSA sheet (an adhesively double-faced PSAfilm) having a PSAlayer on each of the two faces (the first and second faces) of the substrate. Hereinafter, the present invention is described more in detail with a main example being an embodiment where it is applied to a single-faced PSAfilm while the application of the art disclosed herein is not to be limited to such an embodiment.

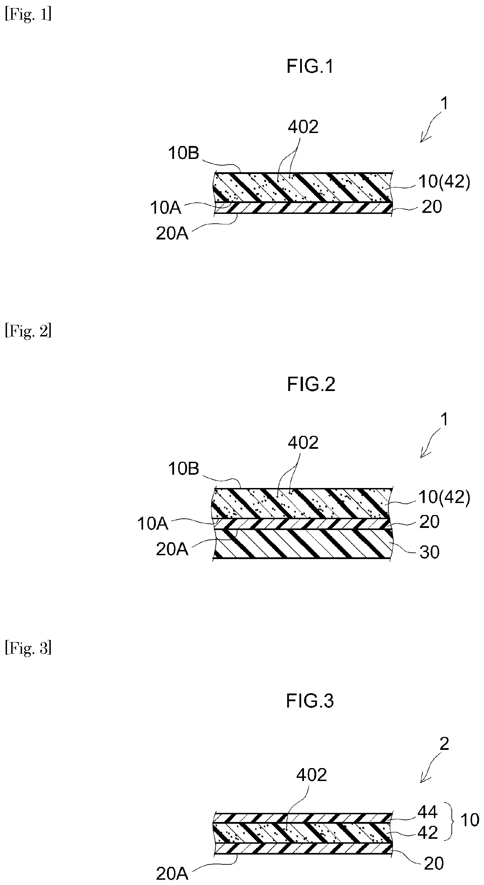

Fig. 1 shows the constitution of the PSA film according to an embodiment. PSA film 1 comprises a resin film 10 as a substrate and a PSAlayer 20 provided on a first face 10A thereof, and is used by applying the PSAlayer 20 to an adherend. In a preferable embodiment, a second face (backside) 10B of resin film 10 forms a releasable surface (release face). Prior to use (i.e., before applied to the adherend), PSAfilm 1 can be wound in a roll so that a surface (adhesive face) 20A of PSA layer 20 is brought in contact with the backside 10B of resin film 10, whereby surface 20A is protected. Alternatively, as in PSAfilm 1 shown in Fig. 2, the surface 20A of PSAlayer 20 may be protected with a release liner 30 having a release face at least on the PSAlayer 20 side.

PSA film 1 in this embodiment has, as all or part of resin film 10, a laser beam-absorbing layer 42 comprising a laser beam absorbent. Laser beam-absorbing layer 42 is typically a layer formed from a resin composition comprising a prescribed absorbent 402 as the laser beam absorbent. In the examples shown in Figs. 1 and 2, resin film 10 has a monolayer structure formed of laser beam-absorbing layer 42; however, the structure of resin film 10 is not limited to a monolayer structure. For instance, as PSA film 2 shown in Fig. 3, resin film 10 can be a laminate including a plurality of layers (here, the first and second layers 42 and 44 placed on the PSA layer 20 side and on the backside thereof, respectively) and at least one of the layers can be a laser beam-absorbing layer 42. In the example shown in Fig. 3, the first layer 42 is a layer (laser beam-absorbing layer) formed from a resin composition comprising a prescribed absorbent 402 and the second layer 44 is a layer formed from a resin composition free of a laser beam absorbent.

<PSA film>

The PSA film disclosed herein is characterized by having a laser beam absorbance of 20 % or higher in the wavelength range between 900 nm and 1100 nm. The laser beam absorbance indicates the ratio of the prescribed laser beam (energy) actually absorbed by the PSA film to the prescribed laser beam (total energy) projected onto the PSA film. With the PSA film having a 20 % or higher laser beam absorbance, the prescribed laser beam can be efficiently absorbed.

In some embodiments, the PSA film has a laser beam absorbance of, for instance, higher than 20 %, possibly 25 % or higher, 30 % or higher, 45 % or higher, 60 % or higher, or even 75 % or higher. The laser beam absorbance of the PSA film can be 100 %. For practical use, it is preferably 95 % or lower, or possibly 90 % or lower.

The transmittance of the PSA film is not particularly limited. From the standpoint of facilitating an increase in laser beam absorbance, in some embodiments, the PSA film may have a prescribed laser beam transmittance of, for instance, lower than 70 %, lower than 50 %, lower than 40 %, or even lower than 35 %. The minimum transmittance of the PSA film is not particularly limited. From the standpoint of facilitating inspection of the workpiece through the PSA film, in some embodiments, the PSA film may have a transmittance of, for instance, 1 % or higher, 5 % or higher, 8 % or higher, 10 % or higher, or even 20 % or higher. It is useful to be able to inspect the workpiece through the PSA film when checking the processed area and the state of adhesion of the PSA film.

The reflectance of the PSA film is not particularly limited. From the standpoint of readily obtaining a higher laser beam absorbance, in some embodiments, at the wavelength where the laser beam absorbance minimizes in the wavelength range between 900 nm and 1100 nm, the PSA film may have a prescribed laser beam reflectance of, for instance, lower than 50 %, lower than 40 %, lower than 20 %, or even lower than 10 %. The minimum reflectance of the PSA sheet is not particularly limited and can be zero. From the practical standpoint, the reflectance of the PSA sheet is usually suitably 1 % or higher, or possibly 3 % or higher.

As the laser beam absorbent, it is possible to use various materials capable of increasing the laser beam absorbance in the wavelength range between 900 nm and 1100 nm. The PSA film may include one, two or more species of laser beam absorbent. In the PSA film including two or more species of laser beam absorbent, these laser beam absorbents can be used as a blend or can be included separately in different layers in the PSA film.

When a laser beam absorbent is used in a powder form, the shape of particles forming the powder is not particularly limited. For instance, it can be flaky, spherical, needle-shaped, polyhedral, irregularly-shaped, etc. In typical, a flaky, spherical or needle-shaped laser beam absorbent can be preferably used. The mean particle diameter of the laser beam absorbent is not particularly limited. It can be, for instance, 0.005 $\mu$m or greater and 20 $\mu$m or less. From the standpoint of the dispersibility, it is usually preferable to use a laser beam absorbent having a mean particle diameter of 10 $\mu$m or less, or 5 $\mu$m or less. From the standpoint of efficiently and easily obtaining an increase in laser beam absorbance with a small amount of the laser beam absorbent, in some embodiments, the laser beam absorbent can have a mean particle diameter of, for instance, 3 $\mu$m or less, 1 $\mu$m or less, 0.6 $\mu$m or less, 0.4 $\mu$m or less, or even 0.3 $\mu$m or less. From the standpoint of the ease of handling and uniformly dispersing the powder, in some embodiments, the laser beam absorbent may have a mean particle diameter of, for instance, 0.008 $\mu$m or greater, 0.01 $\mu$m or greater, 0.05 $\mu$m or greater, 0.1 $\mu$m or greater, 0.15 $\mu$m or greater, or even 0.2 $\mu$m or greater. As used herein, unless otherwise specified, the "mean particle diameter" refers to a particle diameter at 50 % cumulative volume (i.e., 50 % volume-based mean particle diameter) in a size distribution measured using a particle counter based on the laser scattering/diffraction method.

The PSA film disclosed herein comprises, as the laser beam absorbent, a prescribed absorbent, that is, a laser beam absorbent that comprises, as a constituent element, a metal having a specific heat of lower than 900 J/kg ·K and a heat conductivity of lower than 200 W/m ·K. The prescribed absorbent can be selected from the group consisting of, any of a single metal species satisfying the specific heat and the heat conductivity; an alloy comprising any of a single metal species that satisfies the specific heat and the heat conductivity, with the metal species contained at a ratio higher than 50 % by weight, higher than 70 % by weight, or even higher than 90 % by weight; an alloy comprising two or more metal species satisfying the specific heat and the heat conductivity, with the metal species contained at a total ratio higher than 50 % by weight, higher than 70 % by weight or higher than 90 % by weight; and a metal compound comprising, as a constituent element, a metal species that qualifies as the single metal species or as the alloy. Examples of the prescribed absorbent as referred to herein include iron, an iron alloy (e.g. an alloy of iron that includes at least one species of element selected from the group consisting of Cr, Ni, Si, W, Mn and C) and a metal compound (iron-based metal) that comprises, as a constituent element, iron or a metal (iron-based compound) that qualifies as the iron alloy. As the iron-based compound, for instance, an iron-based oxide (an oxide of the iron-based metal) can be preferably used. Other examples of the prescribed absorbent include a Mn-based compound that comprises, as a constituent element, Mn or a metal (Mn-based metal) that qualifies as a Mn alloy. In particular, a Mn-based oxide is preferable. For the prescribed absorbent, solely one species or a combination of two or more species can be used. In the PSAfilm comprising two or more species of prescribed absorbent, these prescribed absorbents can be used as a blend or included separately in different layers of the PSA film.

The prescribed absorbent allows the energy of the absorbed prescribed laser beam to more effectively act on the workpiece as compared to a laser beam absorbent (e.g. Al powder) comprising, as a constituent element, a metal that does not satisfy one or both of the specific heat and the heat conductivity. For instance, one reason for this can be presumed as below. It is noted that the scope of this invention is not limited by this. In particular, with decreasing specific heat of the laser beam absorbent (or simply the "absorbent" hereinafter), calories required to increase the absorbent's temperature by 1 °C will decrease. Because of this, when the energy of the absorbed prescribed laser beam is converted to heat and the workpiece is heated to a temperature required for the machining, the energy loss associated with heating the absorbent itself can be reduced. Thus, according to a laser beam absorbent having a low specific heat, the energy of the absorbed prescribed laser beam can be more efficiently used to heat the workpiece. The present inventors have focused on that, after a PSA film using Al powder as the absorbent was applied to a workpiece and the workpiece was cut with a prescribed laser beam, heat damage was found in the surroundings of the cut area in the PSAfilm as well.

This suggests that part of the energy of the absorbed prescribed laser beam is not directed to the workpiece and is wasted through dispersion in in-plane directions (divergent directions) of the PSA film. According to an absorbent having a lower heat conductivity, the dispersion of heat in in-plane directions of the PSA film can be inhibited to conduct the energy of the absorbed prescribed laser beam to the area being processed in the workpiece efficiently. It is presumed that because of these reasons, according to a laser beam absorbent that has (as a constituent element) a metal having a specific heat of lower than 900 J/kg K and a heat conductivity of lower than 200 W/m ·K, a workpiece can be efficiently processed with the prescribed laser beam.

In the art disclosed herein, as the specific heat and heat conductivity values of metals, the mean specific heat values (0 °C to 100 °C, in J/kg ·K) and heat conductivity values (0 °C to 100 °C, in W/m ·K) listed in "Metal Data Book" (Japan Inst. of Metals edition, 4th revised ed., Maruzen, published February, 2004) are used. For instance, Fe has a specific heat of 456 J/kg•K and a heat conductivity of 78.2 W/m•K; Mn has a specific heat of 486 J/kg•K and a heat conductivity of 7.8 W/m•K; Ti has a specific heat of 528 J/kg•K and a heat conductivity of 21.6 W/m•K; and Zn has a specific heat of 394 J/kg•K and a heat conductivity of 119.5 W/m•K. Examples of other metal that satisfies the specific heat of lower than 900 J/kg•K and the heat conductivity of lower than 200 W/m•K include Ni and Co which are iron-group metals. Other examples include Zr, Mo and Cr. As described above, Al has a specific heat of 917 J/kg ·K and a heat conductivity of 238 W/m ·K. Thus, the concept of prescribed absorbent here does not include Al power or alumina.

The specific heat of the metal in the prescribed absorbent can be, for instance, below 600 J/kg ·K or below 500 J/kg ·K. The minimum specific heat of the metal is not particularly limited. From the standpoint of facilitating the decomposition and disappearance of the PSA film by the heat conducted from the prescribed absorbent, in some embodiments, the metal may have a specific heat of, for instance, 200 J/kg ·K or higher, 300 J/kg ·K or higher, 350 J/kg ·K or higher, or even 400 J/kg ·K or higher.

The metal in the prescribed absorbent may have a heat conductivity of, for instance, lower than 150 W/m ·K, lower than 125 W/m ·K, or even lower than 100 W/m ·K. The minimum specific heat of the metal is not particularly limited. From the standpoint of facilitating the decomposition and disappearance of the PSA film by the heat that is conducted from the prescribed absorbent heated with the prescribed laser beam, in some embodiments, the metal may have a heat conductivity of, for instance, 20 W/m ·K or higher, 40 W/m ·K or higher, or even 60 W/m ·K or higher. In the prescribed absorbent including several metal species, the heat conductivity of the metals in the prescribed absorbent refers to the sum of multiplication products between the heat conductivities of the metal species and the molar fractions of the corresponding metal species in the total number of moles of all metals in the prescribed absorbent. The same applies to the specific heat of the prescribed absorbent that comprises several metal species.

In some embodiments, as the prescribed absorbent, one, two or more species can be preferably used, selected from the group consisting of metals belonging to any of Group 4 to Group 12 (more preferably any of Group 4 to Group 10) in the Periodic Table and metal compounds comprising these metals as constituent elements. The use of such a prescribed absorbent can efficiently increase the prescribed laser beam absorbance. The metal compounds comprising these metals as constituent elements are more preferable.

In general, as compared to a metal alone, a metal compound comprising the metal as a constituent element tend to have lower specific heat and heat conductivity values. Thus, in some embodiments of the PSA film disclosed herein, as the prescribed absorbent, it is preferable to use a metal compound comprising, as a constituent element, a metal that satisfies (has) preferable specific heat and heat conductivity values disclosed herein. The metal compound that can be used as the prescribed absorbent may be, for instance, an oxide, sulfide, carbide, nitride, hydroxide or oxyhydroxide of a metal that satisfies (has) preferable specific heat and heat conductivity values disclosed herein. Other examples of the metal compound that can be used as the prescribed absorbent include an organometallic compound (a coordination compound, etc.) that includes ions of the metal. From the standpoint of suitably maintaining the ability to absorb the prescribed laser beam while enduring the heat associated with the absorption of the prescribed laser beam, oxides, sulfides, carbides and nitrides of the metals are preferable and the oxides are particularly preferable. Examples of the oxides include, but are not limited to, iron oxides ($FeO$, $Fe_3O_4$, $Fe_2O_3$, etc.), manganese dioxide, titanium black, chromium oxides ($CrO$, $Cr_2O_3$, etc.) and ferrite. Examples of the sulfides include, but are not limited to, iron sulfides and molybdenum sulfides.

In the PSA film disclosed herein, the prescribed absorbent content is not particularly limited and it can be suitably selected, for instance, in a range of 0.01 % or greater and 20 % or less by weight. In some embodiments, the prescribed absorbent content can be, for instance, 0.05 % by weight or greater, 0.1 % by weight or greater, 0.3 % by weight or greater, 0.5 % by weight or greater, or even 0.8 % by weight or greater. With increasing prescribed absorbent content, the prescribed laser beam absorbance tends to increase. On the other hand, an excessive prescribed absorbent content may facilitate dispersion of the energy of the absorbed prescribed laser beam in in-plane directions, resulting in a greater energy loss. From such a standpoint, the prescribed absorbent content is usually suitably 15 % by weight or less, preferably 10 % by weight or less, more preferably 7 % by weight or less, possibly 5 % by weight or less, or even less than 5 % by weight.

In addition to the prescribed absorbent, the PSA film disclosed herein may secondarily include a non-prescribed laser beam absorbent as necessary. Hereinafter, such a non-prescribed laser beam absorbent used secondarily may be referred to as a "secondary absorbent." For instance, the secondary absorbent may be used for purposes such as increasing the PSA film's absorbance, adjusting the transmittance or reflectance, adjusting the appearance, etc. As the secondary absorbent, it is possible to use metals such as aluminum, copper, silver and gold; metal compounds such as oxides, nitrides and carbides of these metals; carbon black; organic compounds such as phthalocyanine-based compounds, cyanine-based compounds, aminium-based compounds, naphthalocyanine-based compounds, naphthoquinone-based compounds, diimmonium-based compounds and anthraquinone-based compounds.

The secondary absorbent is preferably used in an amount equivalent to less than 50 % by weight of the total amount of laser beam absorbents in the PSA film (i.e. the combined amount of the prescribed and non-prescribed absorbents); or it can be less than 25 %, less than 10 %, or even less than 5 %. The PSA film can also be essentially free of a secondary absorbent. Here, being essentially free of a secondary absorbent means that a secondary absorbent is not used at least intentionally. The total amount of laser beam absorbents in the PSA film is suitably 25 % by weight or less of the PSA film, or more preferably 20 % by weight or less, 15 % by weight or less, or 10 % by weight or less.

The carbon black (CB) content of the PSA film is preferably below 0.3 % by weight, more preferably below 0.1 % by weight, yet more preferably below 0.05 % by weight, or particularly preferably below 0.02 % by weight. With decreasing CB content, the PSA film tends to have greater anti-blackening properties. The PSA film may be essentially free of CB. In other words, in the PSA film, CB may not be used at least intentionally. The PSA film disclosed herein includes the prescribed absorbent; and therefore, a workpiece can be efficiently processed even when CB is not used or used only in a limited amount as described above. According to such a PSA film, an increase in efficiency of workpiece machining can be favorably obtained with anti-blackening properties.

In some embodiments, as the prescribed absorbent, a black metal compound can be preferably used. With the use of the black metal compound, the laser beam absorbance of the PSA film can be efficiently increased. By this, even when CB is not used or used only in a limited amount, a PSA film having an aforementioned preferable laser beam absorbance can be favorably obtained. Studies by the present inventors have revealed that, surprisingly, unlike CB, such a black metal compound is less likely to cause black residues. Thus, with the use of the black metal compound, an increase in efficiency of workpiece machining can be favorably obtained with anti-blackening properties.

Examples of the black metal compound include, but are not limited to, iron oxides, manganese dioxide, titanium black, chromium oxides, iron sulfides and molybdenum sulfides. Black metal compounds preferable in terms of availability include iron oxides (e.g. FeO, $Fe_3O_4$, etc.), titanium black and manganese dioxide. The titanium black refers to black particles having titanium atoms and preferably black particles of titanium oxynitride, lower titanium oxides, etc. Examples of particularly preferable black metal compounds include iron oxides and titanium black.

The amount of the black metal compound in the PSA film can be, for instance, 0.05 % by weight or greater. From the standpoint of increasing the laser beam absorbance, it can be 0.1 % by weight or greater, 0.3 % by weight or greater, 0.5 % by weight or greater, or even 0.8 % by weight or greater. From the standpoint of reducing the energy loss caused by dispersion in in-plane directions of the PSA film, the amount of the black metal compound included is usually suitably 15 % by weight or less, preferably 10 % by weight or less, more preferably 7 % by weight or less, possibly 5 % by weight or less, or even less than 5 % by weight. The ratio of the black metal compound in the prescribed absorbent can be, for instance, higher than 50 % by weight, 70 % by weight or higher, 90 % by weight or higher, or even essentially 100 % by weight.

The backside of the PSA film preferably has a lightness L* below 95. In some embodiments, for instance, the backside of the PSA film may have a lightness L* below 90, below 70, below 60, below 50, below 45, or even below 40. When the backside is configured to such a low lightness L*, the laser beam absorbance of the PSA film can be readily increased. The minimum lightness L* is not particularly limited. From the standpoint of the design capability, surface printability, weathering resistance, easy identification, etc., it is usually suitably 20 or higher, or possibly 30 or higher. In some embodiments, the backside of the PSA film may have a lightness L* of, for instance, 40 or higher, or even 50 or higher.

The chromatic coordinate a* of the backside of the PSA film is not particularly limited. In some embodiments, from the same standpoint as the lightness L*, the backside of the PSA film may have a chromatic coordinate a* in a range, for instance, between -15 and +15, between -10 and +10, between -5 and +7, between -3 and +5, between -1.5 and +3, or even between 0 and +2. The chromatic coordinate b* of the backside of the PSA film is not particularly limited. For instance, it can be in a range between -15 and +15, between -10 and +10, between -5 and +5, between -3 and +2, or even between -1.5 and +1.

As for the front face of the PSA film, suitable lightness L* and chromatic coordinates a* and b* can be selected in the same ranges described above for those of the backside of the PSA film. The lightness L* and chromatic coordinates a* and b* can be each comparable or different between the front face and backside of the PSA film.

In the present description, the lightness L* and chromatic coordinates a* and b* refer to the lightness L* and chromatic coordinates a* and b* specified by the L*a*b* color space based on the definition suggested by the International Commission on Illumination in 1976 or specified by JIS Z8729. In particular, the lightness L* and chromatic coordinates a* and b* can be determined, using a colorimeter (trade name "CR-400" available from Konica Minolta Holdings Inc.;

chromameter). The lightness L* and chromatic coordinates a* and b* can be adjusted through selection of a species of laser beam absorbent and its amount used, the use or absence of use of other colorant(s) besides the laser beam absorbent, the species of colorant and its amount used if any, and so on.

The thickness of the PSA film is not particularly limited. It is usually suitably about 10 μm to 200 μm. From the standpoint of the handling properties of the PSA film, in some embodiments, the PSA film may have a thickness of, for instance, 20 μm or greater, 25 μm or greater, 40 μm or greater, 55 μm or greater, or even 80 μm or greater. From the standpoint of rapid and precise laser machining, the thickness of the PSA film can be, for instance, 150 μm or less, 120 μm or less, or even 100 μm or less. In some cases, the thickness of the PSA film can be 80 μm or less, 60 μm or less, or even 50 μm or less.

<Substrate>

The PSA film disclosed herein comprises a resin film as the substrate. Examples of the resin material forming the resin film include, but are not limited to, polyester resins such as polyethylene terephthalate (PET) and polybutylene terephthalate (PBT); and polyolefin resins such as polyethylene, polypropylene, ethylene-propylene copolymers and polypropylene-polyethylene blend resins; as well as vinyl chloride resins (typically a soft vinyl chloride resin), vinyl acetate resins and polyamide resins. The substrate may have a monolayer structure or a multilayer structure having two or more layers.

In some embodiments, a multilayer substrate can be preferably used. The multilayer substrate has an advantage that, for instance, the front face (to be applied to the workpiece) and the backside can be easily differentiated in function and appearance. In the multilayer substrate, the resin materials forming the respective layers can be of the same or different species. The multilayer substrate can have, for instance, a two-layer to five-layer structure, or a two-layer or three-layer structure. In an embodiment, a three-layer substrate can be preferably used.

In some other embodiments, the substrate may have a monolayer structure. The monolayer substrate can be advantageous in terms of productivity and quality consistency of the substrate.

From the standpoint of the PSA film's ease of cutting with the prescribed laser beam and anti-blackening properties, in some embodiments, a polyolefinic resin film or a polyester-based resin film can be preferably used as the resin film.

Here, the polyolefinic resin film refers to a resin film whose primary component is a polyethylene (PE) resin and/or a polypropylene (PP) resin. As used herein, the primary component refers to a component whose content is higher than 50 % by weight unless otherwise specified. The polyolefinic resin film may include a PE resin and/or a PP resin and the total amount of the PE and PP resins may be more than 50 % by weight of the polyolefin resin film, or preferably 70 % by weight or more, for instance, 85 % by weight or more. In the resin film that includes a PE resin, but is free of a PP resin, the total amount equals to the PE resin content.

The PE resin may include, as the primary component, various kinds of polymer (ethylenic polymer) in which ethylene is the primary monomer unit. It can be a PE resin essentially formed of one, two or more species of ethylenic polymer. The ethylenic polymer can be ethylene homopolymer or a copolymer (random copolymer, block copolymer, etc.) of ethylene as the primary monomer and other α-olefin as a secondary monomer. Favorable examples of the α-olefin include α-olefins with 3 to 10 carbon atoms, such as propylene, 1-butene (possibly a branched 1-butene), 1-hexene, 4-methyl-1-pentene and 1-octene. For instance, a preferable PE resin includes, as the primary component, an ethylenic polymer in which an α-olefin as the secondary monomer is copolymerized in an amount up to 10 % by weight (typically up to 5 % by weight).

The PE resin may include a copolymer of ethylene and a functional group-containing monomer (a monomer having a different functional group) in addition to the polymerizable functional group; or it can be a PE resin obtained by copolymerizing such a functional group-containing monomer with an ethylenic polymer, etc. Examples of the copolymer of ethylene and the functional group-containing monomer include ethylenevinyl acetate copolymer (EVA), ethylene-acrylic acid copolymer (EAA), ethylene-methacrylic acid copolymer (EMAA), ethylene-methyl acrylate copolymer (EMA), ethylene-ethyl acrylate copolymer (EEA), ethylene-methyl methacrylate copolymer (EMMA), and ethylene-(meth)acrylic acid (i.e. acrylic acid and/or methacrylic acid) copolymer crosslinked with a metal ion.

The density of the PE resin is not particularly limited. The concept of PE resin here includes all of high-density polyethylene (HDPE), middle-density polyethylene (MDPE), low-density polyethylene (LDPE) and linear low-density polyethylene (LLDPE). In an embodiment, the PE resin may have a density of, for instance, about 0.90 g/cm³ to 0.94 g/cm³. Preferable PE resins include LDPE and LLDPE.

The PP resin may include, as the primary component, various species of polymer (propylene-based polymer) formed from propylene as the primary monomer unit, that is, polymer in which propylene accounts for more than 50 % by weight of all the monomers (starting monomers). The PP resin can be essentially formed of one, two or more species of propylene-based polymer. Here, the concept of propylene-based polymer encompasses propylene homopolymer as well as random and block copolymers of propylene and other monomer(s) (random polypropylene and block polypropylene).

The substrate preferably includes a laser beam-absorbing layer. The laser beam-absorbing layer preferably includes the prescribed absorbent. In a multilayer substrate, at least one layer is preferably a laser beam-absorbing layer that includes the prescribed absorbent. The substrate including the laser beam-absorbing layer can be configured so that the PSA film has a laser beam absorbance of 20 % or higher. In some embodiments, the substrate has a laser beam absorbance of, for instance, possibly 15 % or higher, usually suitably 20 % or higher, further possibly 25 % or higher, 30 % or higher, 45 % or higher, 60 % or higher, or even 75 % or higher. The laser beam absorbance of the substrate can be 100 %. For practical use, the substrate has a laser beam absorbance of preferably 95 % or lower, or possibly 90 % or lower. The substrate's transmittance and reflectance can be suitably selected in the same ranges described above for those of the PSA film.

As the laser beam absorbent added to the substrate, solely one species or a combination of two or more species can be used among the aforementioned same examples of the laser beam absorbent that can be used in the PSA film. In an embodiment where the laser beam absorbent includes the prescribed absorbent, as the prescribed absorbent, solely one species or a combination of two or more species can be used among the aforementioned same examples of the prescribed absorbent that can be used in the PSA film. As for the laser beam absorbent content and the prescribed absorbent content in the substrate, the respective sets of examples of those in the PSA film can be applied.

As for the backside of the substrate, suitable lightness L* and chromatic coordinates a* and b* can be selected in the same ranges described above for those of the backside of the PSA film. With respect to the front face of the substrate, suitable lightness L* and chromatic coordinates a* and b* can be selected in the same ranges described above for those of the front face of the PSA film.

The method for forming the substrate is not particularly limited. A suitable method can be employed among heretofore known extrusion methods, for instance, inflation extrusion method, casting method, and like methods. The substrate may be unstretched or stretched uniaxially, biaxially, etc. It is possible to obtain a multilayer substrate by employing a single method or a suitable combination of methods among a method where resin compositions corresponding to the respective layers are molded simultaneously (e.g. by a multilayer inflation molding), a method where the respective layers are individually formed and then bonded together, a method where a pre-formed layer is casted with another layer, and so on.

To the substrate, optional additives can be added as necessary. Examples of such additives include fire-retardant, anti-static agent, photo-stabilizer (radical scavenger, UV absorbent, etc.) and antioxidant.

A surface of the substrate may be subjected as necessary to a suitable surface treatment to enhance the tightness of adhesion to its adjacent material or facilitate its release therefrom.

Examples of the surface treatment to enhance the tightness of adhesion include corona discharge treatment, acid treatment, UV irradiation, plasma treatment and primer coating. Such a surface treatment can be preferably applied to both the front face (i.e. the surface on the side to be provided with the PSA layer) and the backside of the substrate.

The surface treatment to facilitate the release can be carried out, using a general silicone-based, long-chain alkyl-based, fluorine-based or like release agent. Such a surface treatment can be preferably applied to the backside of the substrate.

The substrate's thickness is not particularly limited and can be about, for instance, 5 $\mu$m to 150 $\mu$m. From the standpoint of the handling properties of the substrate or of the PSA film having the substrate, in some embodiments, the substrate may have a thickness of, for instance, 15 $\mu$m or greater, 20 $\mu$m or greater, 35 $\mu$m or greater, 50 $\mu$m or greater, or even 75 $\mu$m or greater. From the standpoint of rapid and precise laser machining, in some embodiment, the substrate's thickness can be, for instance, 130 $\mu$m or less, 110 $\mu$m or less, or even 90 $\mu$m or less. In some cases, the substrate's thickness can be 70 $\mu$m or less, 50$\mu$m or less, or even 40 $\mu$m or less.

In the substrate including a laser beam-absorbing layer, the thickness of the laser beam-absorbing layer (in the substrate including several laser beam-absorbing layers, the combined thickness of these layers) can be, for instance, 3 $\mu$m or greater, 5 $\mu$m or greater, or even 10 $\mu$m or greater. From the standpoint of rapid and precise laser machining, in some embodiments, the thickness of the laser beam-absorbing layer (i.e. a place where the laser beam absorbent is present) may be, for instance, 20 % or more, 50 % or more, 70 % or more, or even 90 % or more of the thickness of the entire substrate. It is noted that in a monolayer substrate formed of a laser beam-absorbing layer or in a substrate formed of several laser beam-absorbing layers, the thickness of the laser beam-absorbing layer(s) accounts for 100 % of the thickness of the entire substrate.

<PSA layer>

In the art disclosed herein, the PSA forming the PSA layer is not particularly limited. For instance, it is possible to use a known rubber-based PSA, acrylic PSA, polyester-based PSA, polyurethane-based PSA, silicone-based PSA, or the like. From the standpoint of the adhesive properties and the cost, a rubber-based PSA or an acrylic PSA can be preferably used. The PSA layer may have a monolayer structure, or a laminate structure having two or more layers of different compositions.

Examples of the rubber-based PSA include natural rubber-based PSA and synthetic rubber-based PSA. Specific examples of a rubber-based polymer as the base polymer of the synthetic rubber-based PSA include polybutadiene, polyisoprene, butyl rubber and polyisobutylene; styrene-based elastomers such as styrene-butadiene-styrene block copolymers; styrene-based elastomers such as styrene-ethylene/butylene-styrene block copolymers and styrene-ethylene/butylene random copolymers; and others such as ethylene propylene rubber, propylene butene rubber and ethylene propylene butene rubber.

A preferable acrylic PSA comprises, as the base polymer (the primary component among polymers), for instance, an acrylic polymer having a monomer composition comprising primarily an alkyl (meth)acrylate such as butyl (meth)acrylate and 2-ethylhexyl (meth)acrylate and further comprising as necessary a modifying monomer copolymerizable with the alkyl (meth)acrylate. Examples of the modifying monomer include hydroxyl group-containing monomers such as 2-hydroxyethyl (meth)acrylate; carboxyl group-containing monomers such as (meth)acrylic acid; styrene-based monomers such as styrene; vinyl esters such as vinyl acetate. Such an acrylic PSA can be obtained by a commonly used polymerization method such as solution polymerization, emulsion polymerization, and ultraviolet ray (UV) polymerization.

The PSA layer may include a laser beam absorbent as necessary. In other words, the PSA layer can be a laser beam-absorbing layer. In a PSA layer consisting of several layers, at least one layer among them can include a laser beam absorbent. For the laser beam absorbent to be included in the PSA layer, one, two or more species can be suitably selected for use among the laser beam absorbents list as examples earlier. The laser beam absorbent content of the PSA layer is usually suitably 5 % by weight or less. From the standpoint of the adhesive properties, it is preferably 3 % by weight or less, or possibly 1 % by weight or less. The art disclosed herein can be preferably practiced in an embodiment where the PSA layer is essentially free of a laser beam absorbent.

The PSA layer can contain optional additives as necessary. Examples of such additives include crosslinking agent, tackifier, softening agent, fire retardant, anti-static agent, colorant (pigment, dye, etc.), photo-stabilizer (radical scavenger, UV absorbent, etc.) and antioxidant.

The thickness of the PSA layer can be suitably selected so that suitable adhesive properties can be obtained in accordance with the application of the PSA film. It is usually suitable that the PSA layer has a thickness of 0.5 $\mu$m to 50 $\mu$m. From the standpoint of enhancing the tightness of adhesion to the workpiece, in some embodiments, the thickness of the PSA layer can be, for instance, 1.5 $\mu$m or greater, 3 $\mu$m or greater, 5 $\mu$m or greater, or even 7 $\mu$m or greater. From the standpoint of rapid and precise laser machining, in some embodiments, the PSA layer may have a thickness of, for instance, 30 $\mu$m or less, 20 $\mu$m or less, or even 15 $\mu$m or less.

<Applications>

The PSA film disclosed herein can be preferably used in an embodiment where it is applied to a workpiece to be processed with a short-wavelength laser having a center wavelength of 900 nm to 1100 nm and is laser-cut in this state along with the workpiece being laser-machined. The type of laser machining applied to the workpiece bearing the PSA film disclosed herein is not particularly limited. For instance, it can be cutting, hole-making, carving and engraving.

The material of the workpiece is not particularly limited as long as it can be cut with the prescribed laser beam. Examples of the material include metal and metalloid materials such as iron, iron alloys (carbon steel, stainless steel, chromium steel, nickel steel, etc.), aluminum, aluminum alloys, nickel, tungsten, copper, copper alloys, titanium, titanium alloys and silicon; resin materials such as polyolefin resins, polycarbonate resins and acrylic resins; ceramic materials such as alumina, silica, sapphire, silicon nitride, tantalum nitride, titanium carbide, silicon carbide, gallium nitride and plaster; glass materials such as aluminosilicate glass, soda lime glass, soda aluminosilicate glass and quartz glass; cellulose-based materials such as paper, cardboard, wood materials and plywood; and laminates and composites of these. Favorable examples of the workpiece include metal materials such as iron, aluminum, copper, titanium and alloys (stainless steel, etc.) comprising the respective metals as primary components. The shape of the workpiece is not particularly limited and can be planar, cylindrical, in a rough mass, etc.

In such laser machining, the PSA film disclosed herein can be preferably used in a state applied to the laser-irradiated side surface of a workpiece. For purposes such as surface protection of the workpiece before and after or during the laser machining, the PSA film can be applied to the surface on the reverse side (backside) of the laser-irradiated side. As the short-wavelength laser, for instance, a fiber laser having a center wavelength of about 1050 nm or a diode laser having a center wavelength of about 950 nm can be used.

The matters disclosed in this description include the following:

(1) A PSA film comprising a resin film as a substrate and a PSA layer provided at least on one face of the resin film, wherein
the PSA film includes a laser beam absorbent that comprises, as a constituent element, a metal having a specific heat of less than 900 J/kg·K and a heat conductivity of less than 200 W/m·K, and

the PSA film has a laser beam absorbance of 20 % or higher in the wavelength range between 900 nm and 1100 nm.

(2) The PSA film according to (1) above, wherein the laser beam absorbent includes a black metal compound.

(3) The PSA film according to (2) above, wherein the black metal compound is included in an amount of 0.05 % by weight or greater and 10 % by weight or less.

(4) The PSA film according to any of (1) to (3) above, comprising less than 0.05 % carbon black by weight.

(5) The PSA film according to any of (1) to (4) above, wherein the laser beam absorbent comprises at least one species selected from the group consisting of iron-based oxides, titanium black and manganese-based oxides.

(6) The PSA film according to any of (1) to (5) above, wherein the substrate comprises the laser beam absorbent and the substrate has a laser beam absorbance of 20 % or higher in the wavelength range between 900 nm and 1100 nm.

(7) The PSA film according to any of (1) to (6) above, wherein the substrate is a polyolefin resin film or a polyester resin film.

(8) The PSA film according to any of (1) to (7) above, wherein the substrate has a multilayer structure.

(9) The PSA film according to any of (1) to (8) above, wherein the laser beam absorbance is higher than 20 % and 95 % or lower.

(10) The PSA film according to any of (1) to (9) above, having a transmittance of 5 % or higher at the wavelength where the laser beam absorbance minimizes in the wavelength range between 900 nm and 1100 nm.

(11) The PSAfilm according to any of (1) to (10) above, having a transmittance lower than 50 % at the wavelength where the laser beam absorbance minimizes in the wavelength range between 900 nm and 1100 nm.

(12) The PSA film according to any of (1) to (11) above, having a reflectance lower than 40 % at the wavelength where the laser beam absorbance minimizes in the wavelength range between 900 nm and 1100 nm.

(13) The PSA film according to any of (1) to (12) above, wherein the laser beam absorbent has a mean particle diameter of 0.008 $\mu$m or greater and 0.1 $\mu$m or less.

(14) The PSA film according to any of (1) to (13) above, whose backside has a lightness L* below 45.

(15) A PSA film for laser cutting that is formed of the PSAfilm according to any of (1) to (14) above used in an application involving cutting with a laser beam having a center wavelength between 900 nm and 1100 nm when used.

(16) A method for producing a laser cut article, the method comprising

obtaining a workpiece on which the PSA film according to any of (1) to (15) above is applied, and

subjecting the workpiece with the PSA film applied thereon to irradiation of a laser beam having a center wavelength between 900 nm and 1100 nm to laser-process the workpiece while cutting the PSA film with the laser beam.

(17) The method according (16) above, wherein the workpiece is a metal plate.

[Examples]

Several worked examples relating to the present invention are described below, but the present invention is not intended to be limited to these examples. In the description below, "parts" and "%" are by weight unless otherwise specified. Unless otherwise specified, the amount of each material used is based on its active ingredient.

In the respective Examples below, the following materials were used for preparation of substrates.

LDPE: low density polyethylene (product name "PETROTHENE 186R" available from Tosoh Corporation)

$Fe_3O_4$: triiron tetroxide powder of 250 nm in mean particle diameter

$TiO_2$: titanium dioxide powder of 0.2 $\mu$m in mean particle diameter

Al: aluminum flake of 2 $\mu$m in mean particle diameter

CB: carbon black powder of 20 nm in mean particle diameter

PSA composition P1: Amixture of 100 parts of natural rubber, 70 parts of a tackifier (product name QUINTONE A100 available from Zeon Corporation), 2 parts of an anti-aging agent (product name NOCRAC NS-5 available from Ouchi Shinko Chemical Industrial Co., Ltd.) and 3 parts of an isocyanate-based crosslinking agent (product name CORONATE L available from Nippon Polyurethane Industry Co., Ltd.) and toluene.

<Preparation of PSA films>

(Example 1)

Using a twin-screw extruder (available from Toshiba Machine Co., Ltd.), at a resin temperature of 180 °C, were mixed 3 parts of a black masterbatch (or $Fe_3O_4$ masterbatch, hereinafter) containing 40 % $Fe_3O_4$ in a polyolefin and 97 parts of LDPE and were granulated to prepare pellets of a polyolefin resin composition containing 1.2 % $Fe_3O_4$. By

inflation molding, at a die temperature of 180 °C, the resulting pellets were extruded to obtain a 90 $\mu$m thick resin film F1. One face of the resin film F1 was subjected to corona discharge treatment. The PSA composition PI was applied to the corona discharge-treated surface and was allowed to dry to form a 10 $\mu$m thick PSA layer. A PSA film having a PSA layer on one face of a substrate was thus obtained.

(Examples 2 and 3)

The ratio between the $Fe_3O_4$ masterbatch and LDPE was changed to obtain polyolefin resin compositions containing 2.0 % and 4.0% $Fe_3O_4$, respectively. Otherwise in the same manner as the resin film F1, were obtained resin films F2 and F3. Using resin films F2 and F3 in place of resin film F1, but otherwise in the same manner as Example 1, were obtained PSA films according to Examples 2 and 3.

(Example 4)

Using the extruder, at a resin temperature of 180 °C, were mixed 7 parts of a white masterbatch (or $TiO_2$ masterbatch, hereinafter) containing 60 % $TiO_2$ in a polyolefin and 93 parts of LDPE and were granulated to prepare pellets of a polyolefin resin composition containing 4.2 % $TiO_2$. By inflation molding, at a die temperature of 180 °C, the resulting pellets were extruded to obtain a 90 $\mu$m thick resin film F4. Using resin films F4 in place of resin film F1, but otherwise in the same manner as Example 1, was obtained a PSA film according to this Example.

(Example 5)

The ratio between the $TiO_2$ masterbatch and LDPE was changed to obtain a polyolefin resin composition containing 6.0% $TiO_2$. Otherwise in the same manner as resin film F1, was obtained a resin film F5. Using resin film F5 in place of resin film F1, but otherwise in the same manner as Example 1, was obtained a PSA film according to this Example.

(Example 6)

By inflation molding, at a die temperature of 180 °C, were extruded substrate pellets containing 1.5 % aluminum flake (Al) of 2 $\mu$m in mean particle diameter and 98.5 % LDPE to obtain a 90 $\mu$m thick resin film F6.

(Example 7)

By inflation molding, at a die temperature of 180 °C, were extruded substrate pellets containing 0.08 % carbon black powder (CB) of 20 nm in mean particle diameter and 99.2 % LDPE to obtain a 90 $\mu$m thick resin film F7.

<Evaluations>

Samples in a suitable size were cut out from the PSA films prepared above and subjected to the following evaluations. The results are shown in Table 1.

(1) Transmittance

Measurement system: spectrophotometer under model number "U-4100" available from Hitachi High-Technologies Corporation
Measurement conditions: applied detection mode, %T data mode, 750 nm/min scan rate, 1 nm sampling interval, automated slit control, photomultiplier voltage automated at 1, intensity control mode fixed, high resolution measurement OFF, no dimming film used, PbS sensitivity at 1, 10 mm cell length.
Measurement method:

(i). The measurement system was turned on and kept in standby for at least 2 hours to stabilize the system. Subsequently, without any sample set in, the baseline was measured.
(ii). A sample was then set in the area designated for transmittance detection in the measurement system in such a way that the light would enter the PSAfilm from the back face. Under the measurement conditions shown above, was determined the transmittance in the wavelength range between 900 nm to 1100 nm.

(2) Reflectance

Measurement system: spectrophotometer under model number "U-4100" available from Hitachi High-Technologies Corporation

Measurement conditions: applied detection mode, %R data mode, 750 nm/min scan rate, 1 nm sampling interval, automated slit control, photomultiplier voltage automated at 1, intensity control mode fixed, high resolution measurement OFF, no dimming film used, PbS sensitivity at 1, 10 mm cell length.

Measurement method:

(i). The measurement system was turned on and kept in standby for at least 2 hours to stabilize the system. Subsequently, a standard white plate was set in t the area designated for reflectance detection (with no sample set) and the baseline was measured.

(ii). A sample was then set in the reflectance detection area. Here, in order to prevent reflection of the light that had transmitted through the sample, a resin plate under product name CLAREX® (black-colored, 1 mm thick) available from Nitto Jushi Kogyo Co., Ltd. was placed on the reverse side of the light-entering surface for a sample and the PSA film as the sample was adhered to the resin plate (adhesion condition: 2 kg roller moved back and forth once). Under the measurement conditions shown above, was determined the reflectance in the wavelength range between 900 nm and 1100 nm.

(3) Absorbance

From the transmittance T (%) and reflectance R (%), the minimum absorbance in the 900 nm to 1100 nm wavelength range was determined by the next equation:

$$100\,(\%) - \mathrm{T}\,(\%) - \mathrm{R}\,(\%)$$

(4) Lightness and chromatic coordinates

With respect to the backside of each PSA film, were determined the lightness and the chromatic coordinates. In particular, from the PSAfilm according to each Example, was cut out a 10 cm by 10 cm sample. The sample was placed on a SUS430 plate. Using a chromameter (CR-400 available from Konica Minolta Holdings Inc.), the lightness L* and chromatic coordinates a* and b* were determined at 5 spots in total, namely four corner spots and one center spot, in the sample. Two measurements were carried out at each measurement spot and the average value of the 10 measurements was used.

(5) Laser cutting test

Using a 3.0 mm thick SUS304 plate (2B finished) as a workpiece, the PSAfilm according to each Example was applied to the top face of the workpiece. Alaser beam was irradiated onto the top face side of the workpiece to carry out a cutting test. In particular, using a fiber laser cutting machine (TruLaser 5030 available from TRUMPF, center wavelength 1050 nm), linear laser cutting was carried out under the conditions shown below.

[Laser cutting conditions]

Cutting speed: 5.0 m/min
Output: 3000 W
Supplied gas and pressure: nitrogen gas at a pressure of 18 bar
Diameter of nozzle: 2.0 mm
Height of nozzle: 2 mm
Focus of laser beam: 1.5 mm deep from the top face of the workpiece

The workpiece's machined edge (laser-cut edge, here) was then inspected. With respect to the PSA film and the workpiece, when the cut was successful under the conditions shown above, the cuttability was graded "G" (good); when unsuccessful, the cuttability was graded "P" (poor)

(6) Anti-blackening properties

The workpiece after the laser-cutting test was visually inspected. When blackening was found, the anti-blackening properties were graded "P" (poor); when not found, the anti-blackening properties were graded "G" (good).

[Table 1]

Table 1

| Ex. | Absorbent | | Transmittance (%) | Reflectance (%) | Absorbance (%) | Lightness L* | Chromatic coordinate a* | Chromatic coordinate b* | Cuttability | | Anti-blackening properties |
| --- | --- | --- | --- | --- | --- | --- | --- | --- | --- | --- | --- |
| | Species | Amount (wt%) | | | | | | | PSA film | Workpiece | |
| 1 | $Fe_3O_4$ | 1.2 | 30 | 6 | 64 | 27.9 | 0.6 | 0.5 | G | G | G |
| 2 | | 2.0 | 25 | 5 | 70 | 25.9 | 0.5 | 0.4 | G | G | G |
| 3 | | 4.0 | 10 | 5 | 85 | 23.9 | 0.4 | 0.2 | G | G | G |
| 4 | $TiO_2$ | 4.2 | 45 | 34 | 21 | 91.8 | -0.3 | -0.9 | G | G | G |
| 5 | | 6.0 | 40 | 34 | 26 | 92.2 | -0.3 | -0.9 | G | G | G |
| 6 | Al | 1.5 | 0 | 36 | 64 | n.d. | n.d. | n.d. | G | P | G |
| 7 | CB | 0.08 | 67 | 8 | 25 | n.d. | n.d. | n.d. | G | G | P |
| n.d.: not determined | | | | | | | | | | | |

As shown in Table 1, according to the PSA films of Examples 1 to 5, the workpieces could be cut well along with the PSAfilms. These PSAfilms showed excellent anti-blackening properties on the cut workpieces. On the other hand, with respect to the prescribed-absorbent-free PSAfilm of Example 6, while the cutting of the PSAfilm itself was successful, that of the workpiece was unsuccessful under the aforementioned laser cutting conditions. As for the prescribed-absorbent-free PSAfilm of Example 7 with the absorbance adjusted to at least 20 % by addition of CB, blackening of the cut workpiece was observed.

It is noted that, with respect to the PSA films of Examples 1 to 5, the laser cutting test was carried out at varied cutting speeds while keeping the rest of the laser cutting conditions unchanged to determine the maximum cutting speed (i.e. the maximum speed at which the workpiece can be cut). As a result, the maximum cutting speeds of the PSA films of Examples 1 to 3 were found significantly higher than those of the PSA films of Examples 4 and 5.

Although specific embodiments of the present invention have been described in detail above, these are merely examples and do not limit the scope of the claims. The art according to the claims includes various modifications and changes made to the specific embodiments illustrated above.

[Reference Signs List]

| 1, 2 | PSA films |
|---|---|
| 10 | resin film (substrate) |
| 10A | first face |
| 10B | second face (backside) |
| 20 | PSA layer |
| 20A | surface (adhesive face) |
| 30 | release liner |
| 42 | laser beam-absorbing layer |
| 402 | laser beam absorbent |

**Claims**

1. A pressure-sensitive adhesive film comprising a resin film as a substrate and a pressure-sensitive adhesive layer provided at least on one face of the resin film, the pressure-sensitive adhesive film
   including a laser beam absorbent that comprises, as a constituent element, a metal having a specific heat of less than 900 J/kg ·K and a heat conductivity of less than 200 W/m ·K, and
   having a laser beam absorbance of 20 % or higher in the wavelength range between 900 nm and 1100 nm.

2. The pressure-sensitive adhesive film according to Claim 1, wherein the laser beam absorbent comprises a black metal compound.

3. The pressure-sensitive adhesive film according to Claim 2, wherein the black metal compound is included in an amount of 0.05 % by weight or greater and 10 % by weight or less.

4. The pressure-sensitive adhesive film according to any one of Claims 1 to 3, comprising less than 0.05 % carbon black by weight.

5. The pressure-sensitive adhesive film according to any one of Claims 1 to 4, wherein the laser beam absorbent comprises at least one species selected from the group consisting of iron-based oxides, titanium black and manganese-based oxides.

6. The pressure-sensitive adhesive film according to any one of Claims 1 to 5, wherein
   the substrate comprises the laser beam absorbent, and
   the substrate has a laser beam absorbance of 20 % or higher in the wavelength range between 900 nm and 1100 nm.

7. The pressure-sensitive adhesive film according to any one of Claims 1 to 6, wherein the substrate is a polyolefin resin film or a polyester resin film.

8. The pressure-sensitive adhesive film according to any one of Claims 1 to 7, having a transmittance of 5 % or higher at the wavelength where the laser beam absorbance minimizes in the wavelength range between 900 nm and 1100 nm.

9. The pressure-sensitive adhesive film according to any one of Claims 1 to 8, having a reflectance lower than 40 % at the wavelength where the laser beam absorbance minimizes in the wavelength range between 900 nm and 1100 nm.

10. A pressure-sensitive adhesive film for laser cutting that is formed of the pressure-sensitive adhesive film according to any one of Claims 1 to 9 used in an application involving cutting with a laser beam having a center wavelength between 900 nm and 1100 nm.

[Fig. 1]

FIG.1

[Fig. 2]

FIG.2

[Fig. 3]

FIG.3

## INTERNATIONAL SEARCH REPORT

International application No.

PCT/JP2018/034405

### A. CLASSIFICATION OF SUBJECT MATTER
Int.Cl. C09J7/38(2018.01)i, B32B27/00(2006.01)i, C09J7/24(2018.01)i, C09J7/25(2018.01)i, C09J201/00(2006.01)i

According to International Patent Classification (IPC) or to both national classification and IPC

### B. FIELDS SEARCHED

Minimum documentation searched (classification system followed by classification symbols)
Int.Cl. C09J1/00-201/10, B32B1/00-43/00, B23K26/00-26/70

Documentation searched other than minimum documentation to the extent that such documents are included in the fields searched

| | |
|---|---|
| Published examined utility model applications of Japan | 1922-1996 |
| Published unexamined utility model applications of Japan | 1971-2018 |
| Registered utility model specifications of Japan | 1996-2018 |
| Published registered utility model applications of Japan | 1994-2018 |

Electronic data base consulted during the international search (name of data base and, where practicable, search terms used)
Japio-GPG/FX

### C. DOCUMENTS CONSIDERED TO BE RELEVANT

| Category* | Citation of document, with indication, where appropriate, of the relevant passages | Relevant to claim No. |
|---|---|---|
| X | JP 2014-5372 A (NITTO DENKO CORP.) 16 January 2014, claims 1, 6-7, examples 1-10, tables 1-2, paragraphs [0034], [0063], [0077]-[0079] & US 2013/0344326 A1, claims 1, 6-7, examples 1-10, tables 1-2, paragraphs [0040], [0078], [0099]-[0116] & EP 2679332 A1 & CA 2820680 A1 & CN 103509478 A & BR 102013016336 A2 | 1, 6-10 |
| X | JP 2014-91755 A (HAYAKAWA RUBBER CO., LTD.) 19 May 2014, claim 1, example 2, paragraphs [0084]-[0085], [0098]-[0099], [0103]-[0104] (Family: none) | 1-7 |

☒ Further documents are listed in the continuation of Box C.　　☐ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 11 December 2018 (11.12.2018) | 25 December 2018 (25.12.2018) |

| Name and mailing address of the ISA/ Japan Patent Office 3-4-3, Kasumigaseki, Chiyoda-ku, Tokyo 100-8915, Japan | Authorized officer |
|---|---|
| | Telephone No. |

Form PCT/ISA/210 (second sheet) (January 2015)

**INTERNATIONAL SEARCH REPORT**

International application No.

PCT/JP2018/034405

C (Continuation).    DOCUMENTS CONSIDERED TO BE RELEVANT

| Category* | Citation of document, with indication, where appropriate, of the relevant passages | Relevant to claim No. |
|---|---|---|
| X | WO 2017/116941 A1 (3M INNOVATIVE PROPERTIES COMPANY) 06 July 2017, claims 1, 6, page 18, line 33 to page 19, line 2, page 19, line 35 to page 20, line 4, page 20, lines 11-27, table 1, examples 1-6 & CN 108472941 A | 1, 4, 6-10 |
| X | JP 2012-126823 A (LINTEC CORP.) 05 July 2012, claims 1, 6, paragraphs [0063]-[0065], examples 1-10, tables 1-2 (Family: none) | 1-9 |
| A | JP 2012-119468 A (MAXELL SLIONTEC LTD.) 21 June 2012 (Family: none) | 1-10 |
| A | JP 2016-119432 A (KIMOTO CO., LTD.) 30 June 2016 & US 2016/0189997 A1 & DE 102015016840 A1 & CN 105728958 A & TW 201625759 A | 1-10 |
| P, A | WO 2018/159591 A1 (NITTO DENKO CORP.) 07 September 2018 (Family: none) | 1-10 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2017187004 A
- JP 2004235194 A
- JP 2013018963 A
- JP 2013018964 A